# EUROPEAN PATENT APPLICATION

(11) **EP 3 522 001 A1**
(43) Date of publication of application: **07.08.2019**
(21) Application number: 19154631.6
(22) Date of filing: 30.01.2019
(51) Int. Cl.: G06F 3/16

(54) **VISUAL INSPECTION**

(30) Priority: 31.01.2018 US 201815884706
(71) Applicant: Vocollect, Inc., Pittsburgh, Pennsylvania 15235 (US)
(72) Inventor: EARHART, Curtis, Morris Plains, NJ 07950 (US)
(74) Representative: Houghton, Mark Phillip

(57) **Abstract**

A method for visual inspection includes scanning an object with an imaging device, capturing triggering metrics of the scanned object, and searching for a workflow associated with the metrics. If the workflow is located, the located workflow is initiated; otherwise, a user is prompted for vocal input. In an embodiment, scanning can be performed with a wearable imaging device, such as Google glasses, and vocal input can be provided via a voice-controllable device (for example, a Voice device), configured to communicate with the imaging device.

## Description

### FIELD OF THE INVENTION

The present invention relates to methods of visual inspection, and more particularly to combining object recognition with voice control.

### BACKGROUND

Generally speaking, performing inventory is usually rather inefficient and time-consuming. The workflow can be improved by using imaging devices to perform at least partial object recognition, supported by voice-activated devices in situations when the task cannot be completed based on the information retrieved with the imaging device.

Several attempts have been made to address this issue. For example, U.S. Pat. No. 9,151,953 by Quaddoura discloses pointer tracking for eye-level scanners and displays. A wearable computer device with imaging devices or other sensors is used to collect information that may be provided to the user, such as on a computer display mounted to the device. However, the reference does not discuss associating the imaging device with a voice-controlled device, nor does it cover handling parts of a workflow when there is not enough information retrieved with the imaging device. U.S. Pat. App. No. 20,140,152,816 by Pratt et al. discloses a system, method, and apparatus for interfacing an operating management system with an operator. The system uses a processor to convert workflow instructions from a text command into an audible command, which is transmitted to an operator device. However, the reference does not discuss automatically switching to a voice-operated device for triggering a workflow when an imaging device is incapable of providing sufficient information for such instructions. U.S. Pat. No. 9,256,072 by Lyren discloses a method for detecting a real object with a wearable electronic device and displaying a virtual image of the real object on a display of that device. The movement of the virtual image is used to detect a completion of a task. However, the reference does not discuss associating an imaging device with a voice-controllable device. Consequently, none of the references discuss integrating voice-operated and vision-based devices, with an ability to automatically switch to the voice-operated device for triggering the workflow when the vision-based device is lacking information.

Therefore, a need exists for a method of visual inspection, which can be aided by a voice-controllable device in situations where information retrieved with an imaging device is insufficient for triggering or activating at least some parts of a workflow.

### SUMMARY

Accordingly, the present invention embraces methods for visual inspection.

In an exemplary embodiment, a method for streamlining workflow instructions includes detecting an object using an imaging device, capturing an image of the object, and determining object metrics; accessing a database to select a workflow associated with the determined metrics; and using a voice-controllable device, configured to communicate with the imaging device, to clarify and/or confirm one or more parts of the selected workflow.

In another exemplary embodiment, a method for object recognition includes scanning objects with a wearable imaging device, and detecting a product with predetermined product characteristics; selecting and initiating a workflow associated with the detected characteristics from a database; and using a voice-activated device to trigger actions not covered by the initiated workflow if further action is needed.

In yet another exemplary embodiment, a method for visual inspection includes scanning an object with an imaging device, capturing triggering metrics of the scanned object, and searching for a workflow associated with the metrics. If the workflow is located, it is initiated; otherwise, a user is prompted for vocal input.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts a method for streamlining workflow instructions, according to an embodiment.
Figure 2 schematically depicts a method for object recognition, according to an embodiment.
Figure 3 schematically depicts a method for visual inspection, according to an embodiment.

### DETAILED DESCRIPTION

The present invention embraces methods for visual inspection.

Performing inventory can be time-consuming and require a lot of human interaction to accomplish the task, especially for large-scale operations such as stores or postal delivery services. One way to speed up the process includes implementing a voice-operated solution. To further optimize the overall workflow, a vision-based solution (such as Google glasses) can be combined with the voice solution (such as Voice product). In that case, when the vision solution can detect the product, the correct workflow can be triggered, which may further be activated by the voice device, thus potentially improving the overall efficiency. Various objects detectable by the vision solution (such as barcodes or product names) can be linked to a database. The user can then use the voice-operated device to go through the parts of the workflow that cannot be fully handled by the vision-based device. To reduce user involvement even further, the vision solution could be configured to replace the voice solution completely.

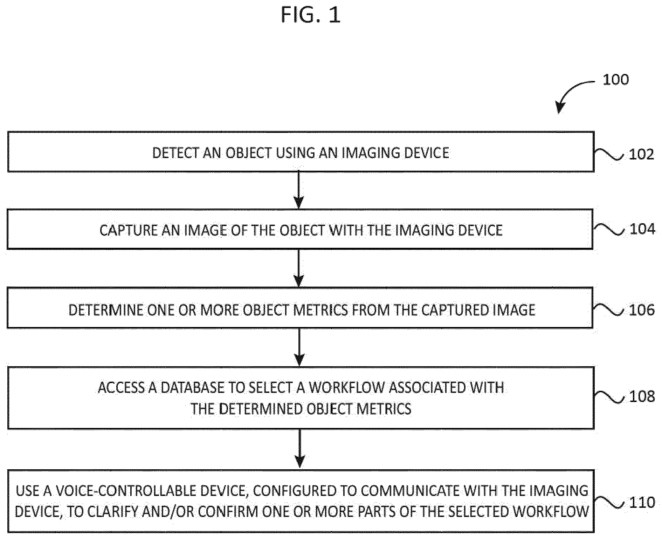

Figure 1 shows a method 100 for streamlining workflow instructions, according to an embodiment. At 102, an object is detected using an imaging device. At 104, an image of the object is captured with the imaging device. At 106, one or more object metrics are determined from the captured image. At 108, a database is accessed to select a workflow associated with the determined object metrics. And at 110, a voice-controllable device, configured to communicate with the imaging device, is used to clarify and/or confirm one or more parts of the selected workflow. The imaging device is configured to scan and detect objects having one or more predetermined object metrics.

In an embodiment, determining one or more object metrics at 106 can include processing the captured image, and extracting object metrics from the image. The object metrics can include one or more barcodes, product name, and/or object dimensions. Using a voice-controllable device at 110 can include using a device integrated with the imaging device. Detecting an object using an imaging device at 102 can include detecting an object using wearable electronic glasses, such as Google glasses.

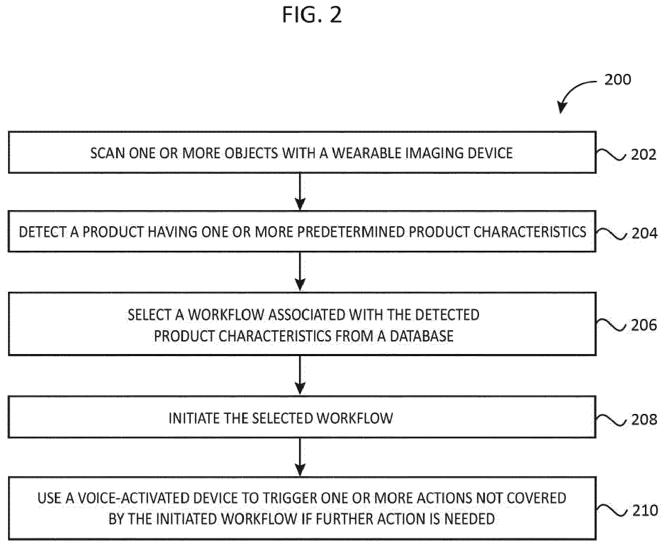

Figure 2 shows a method 200 for object recognition, according to an embodiment. At 202, one or more objects are scanned with a wearable imaging device. At 204, a product having one or more predetermined product characteristics is detected. At 206, a workflow associated with the detected product characteristics is selected from a database. At 208, the selected workflow is initiated. And at 210, a voice-activated device is used to trigger one or more actions not covered by the initiated workflow if further action is needed.

In an embodiment, detecting a product having one or more predetermined product characteristics at 204 can include detecting physical product characteristics, and/or one or more product markers. Detecting product markers can include detecting a barcode, a product name, and/or a color-coded tag displayed on the product. Selecting a workflow from a database at 206 can include selecting a workflow from an external database. Using a voice-activated device at 210 can include using a voice-activated device configured to be integrated with the wearable imaging device. Additionally, using a voice-activated device configured to be integrated with the wearable imaging device can include using a Voice device integrated with Google glasses. Switching to the voice-activated device can be performed automatically, or triggered by a user.

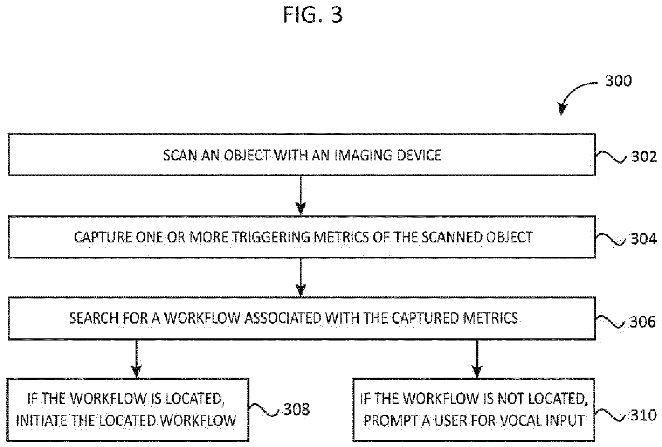

Figure 3 shows a method 300 for visual inspection, according to an embodiment. At 302, an object is scanned with an imaging device. At 304, one or more triggering metrics of the scanned object are captured. At 306, a search for a workflow associated with the captured metrics takes place. At 308, if the workflow is located, the located workflow is initiated. And at 310, if the workflow is not located, a user is prompted for vocal input.

In an embodiment, the method 300 can further include prompting a user for additional vocal input after initiating the located workflow. Capturing metrics at 304 can include processing an image of the object scanned with the imaging device, and extracting one or more triggering metrics. Searching for a workflow at 306 can include searching a database for a workflow associated with the captured metrics. Prompting a user for vocal input at 310 can include receiving commands through a voice-activated device integrated with the imaging device. Scanning an object with an imaging device at 302 can include scanning an object with a portable imaging device. Additionally, scanning an object with a portable imaging device can include scanning an object with wearable electronic glasses, such as Google glasses. Additionally or alternatively, prompting a user for vocal input at 310 can include prompting a user for vocal input using a Voice device.

Device and method components are meant to show only those specific details that are pertinent to understanding the embodiments of the present disclosure so as not to obscure the disclosure with details that will be readily apparent to those of ordinary skill in the art having the benefit of the description herein. In various embodiments, the sequence in which the elements of appear in exemplary embodiments disclosed herein may vary. Two or more method steps may be performed simultaneously or in a different order than the sequence in which the elements appear in the exemplary embodiments.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A method for visual inspection, comprising:
scanning an object with an imaging device;
capturing one or more triggering metrics of the scanned object;
searching for a workflow associated with the captured metrics;
if the workflow is located, initiating the located workflow; and
if the workflow is not located, prompting a user for vocal input.

2. The method according to claim 1, comprising prompting a user for additional vocal input after initiating the located workflow.

3. The method according to claim 1, wherein capturing metrics comprises:
processing an image of the object scanned with the imaging device; and
extracting one or more triggering metrics.

4. The method according to claim 1, wherein searching for a workflow comprises searching a database for a workflow associated with the captured metrics.

5. The method according to claim 1, wherein prompting a user for vocal input comprises receiving commands through a voice-activated device integrated with the imaging device.

6. The method according to claim 1, wherein scanning an object with an imaging device comprises scanning an object with a portable imaging device.

7. The method according to claim 6, wherein scanning an object with a portable imaging device comprises scanning an object with wearable electronic glasses.

8. The method according to claim 7, wherein scanning an object with wearable electronic glasses comprises scanning an object with Google glasses.

9. The method according to claim 1, wherein prompting a user for vocal input comprises prompting a user for vocal input using a Voice device.
